Europäisches Patentamt

European Patent Office

Office européen des brevets

(19)

(11) Publication number: **0 018 809**
**B1**

(12) **EUROPEAN PATENT SPECIFICATION**

(45) Date of publication of patent specification: **05.10.83**

(51) Int. Cl.³: **F 16 B 21/04**

(21) Application number: **80301386.1**

(22) Date of filing: **28.04.80**

(54) Stud fastener receptacle.

(30) Priority: **02.05.79 US 35395**

(43) Date of publication of application:
**12.11.80 Bulletin 80/23**

(45) Publication of the grant of the patent:
**05.10.83 Bulletin 83/40**

(84) Designated Contracting States:
**AT BE CH DE FR GB IT LI LU NL SE**

(56) References cited:
**DE - A - 2 061 995**
**DE - A - 2 508 463**
**DE - U - 1 744 235**
**FR - A - 1 517 501**
**US - A - 4 047 266**
**US - A - 4 128 923**

(73) Proprietor: **DZUS FASTENER EUROPE LIMITED**
**Farnham Trading Estate**
**Farnham Surrey, GU9 9PL (GB)**

(72) Inventor: **Schenk, Peter**
**525 Bay 5th Street**
**West Islip New York (US)**

(74) Representative: **Brunner, Michael John et al,**
**GILL JENNINGS & EVERY 53-64 Chancery Lane**
**London WC2A 1HN (GB)**

Courier Press, Leamington Spa, England

Stud fastener receptacle

The invention relates to receptacles for fasteners of the kind having a stud which is received and secured in the receptacle to fasten together a pair of members. More particularly the invention relates to such receptacles which can be inserted into an aperture in a member from the front.

Various types of front insert receptacles have been developed in recent years for avoiding the problems resulting from difficulty of access to the rear side of a panel or similar structure on which the receptacle is to be mounted. Several examples are depicted in the US—A—3,975,804. In general the front insert receptacles shown in that patent specification deal with various types of tubular housings with keyways and wound springs for facilitating mounting of the various forms. All of the structures shown an element in the housing which is shiftable between an operative and inoperative position so that when the receptacle is positioned in an opening in a member, movement of the element into the operative position locks the receptacle in position on the member. Other parts of the various receptacle designs contain engagement structure for coupling with a stud interengaged with a second member so that the two members can be fastened together by the stud and receptacle.

An example of a snap-in type of front insert receptacle is shown in US—A—4,128,923. This receptacle has essential features in common with the receptacle according to the invention. The snap-in type, however, lacks the advantageous, separately operable mechanism — for locking the receptacle to one of the members — that is part of this invention. Once again, the principle is to provide a means for mounting the receptacle from the front side of a panel-like surface without requiring access to the rear of the panel.

The type of structures shown in the above discussed patent specifications are prevalent in wall mountings and in panel to panel engagements such as used in cabinets and the like.

Naturally, in fasteners of this type, cost is quite important and minimizing the cost of materials, the number of components and assembly time is desirable.

According to the invention a receptacle for receiving and securing a stud to enable a pair of members to be fastened together, the receptacle being mounted in a non-circular aperture in one of the members, comprises a housing for location in the aperture, the housing being substantially U-shaped and comprising a base and a pair of depending opposed substantially flat legs, a part for engaging the front face of the member formed by an outwardly extending flange at the free end of each leg, an abutment formed by an inwardly directed tang on each leg, and the flat sides of the legs preventing rotation of the receptacle in the aperture; an element rotatable in the housing between a first position in which it is biased against the abutments on the legs and a second position in which it is biased against the rear face of the one member to lock the receptable on the one member; and means for securing the stud within the receptacle.

A front insert receptacle of this type can be mounted in a member such as a panel by insertion into the opening from one side thereof and locked in position by appropriate manipulation from the same exposed side of the member.

A minimum number of parts of inexpensive construction are provided leading to an overall low cost product. The receptacle is designed to be quickly and efficiently inserted which further enhances the minimum cost feature of the receptacle particularly when the receptacle is mass produced and used in large numbers in single and multiple installations.

Preferably, the receptacle is designed for use with a stud of the type employing a helical cam slot designed for quarter turn action in locking and unlocking the stud with respect to the receptacle. This type of arrangement is commonly used, for example, in fastening panel to panel arrangements or mounting a member on a wall surface where access to the rear side of the receiving surface is difficult or impossible. The entire assembly operation for the fastener, which includes insertion and mounting of the receptacle in position from the exposed side of the receiving panel and the ultimate fastening and unfastening of the stud with respect to the receptacle can be carried out from the same exposed side of the panel.

One example of a fastener which has a receptacle according to the present invention will now be described with reference to the accompanying drawings in which:—

Figure 1 is a top plan view of a fastener assembly, including a receptacle according to the invention, shown fastening fragmentary portions of two members together;

Figure 2 is a bottom plan view thereof;

Figure 3 is a sectional view of the fastener assembly showing the stud and receptacle in exploded positions;

Figure 4 is a sectional view similar to that of Figure 3, taken along the line 4—4 in Figure 1 and showing the stud and receptacle in fastened condition and,

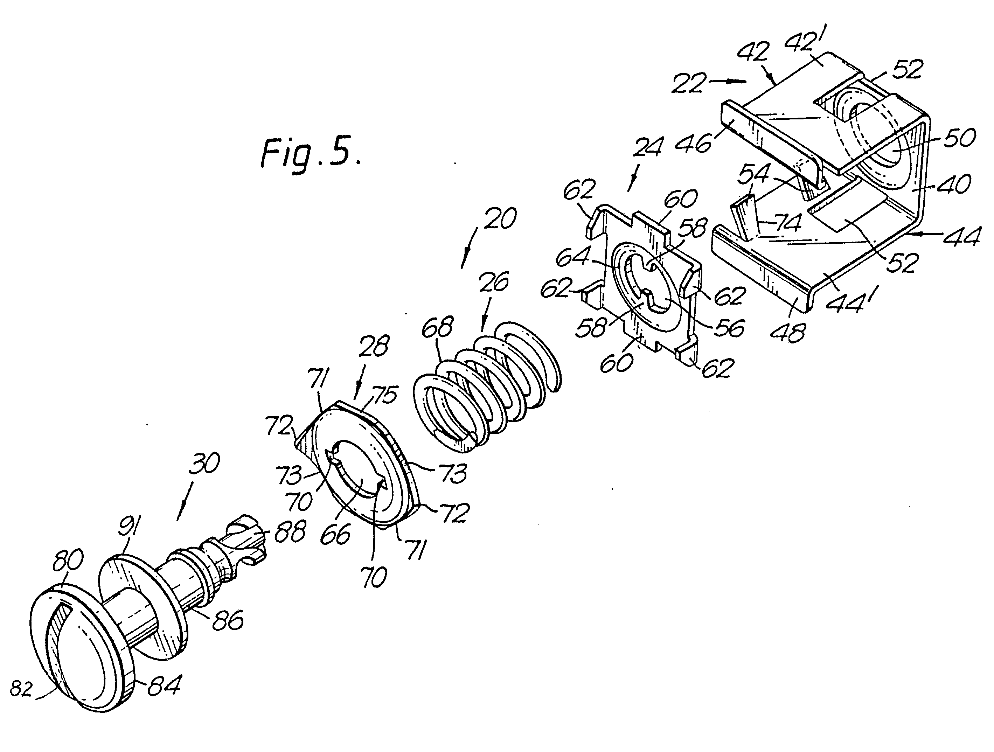

Figure 5 is an exploded perspective view of the fastener assembly.

The figures show a receptacle 20 designed so that it can be manufactured from a conventional inexpensive metal or plastics material, and is designed for use, for example, in panel-to-panel arrangements or for mounting fixtures of other structures to a wall surface with a receiving panel or surface of the type where access to the rear side thereof is difficult or impossible. The receptacle is mounted from the exposed front surface of the receiving panel.

In the example shown the receptacle 20 includes a U-shaped housing 22, a base plate 24, a helical compression spring 26, and a top plate 28. The receptacle 20 is designed for coupling and uncoupling with a stud 30 to form a fastener assembly.

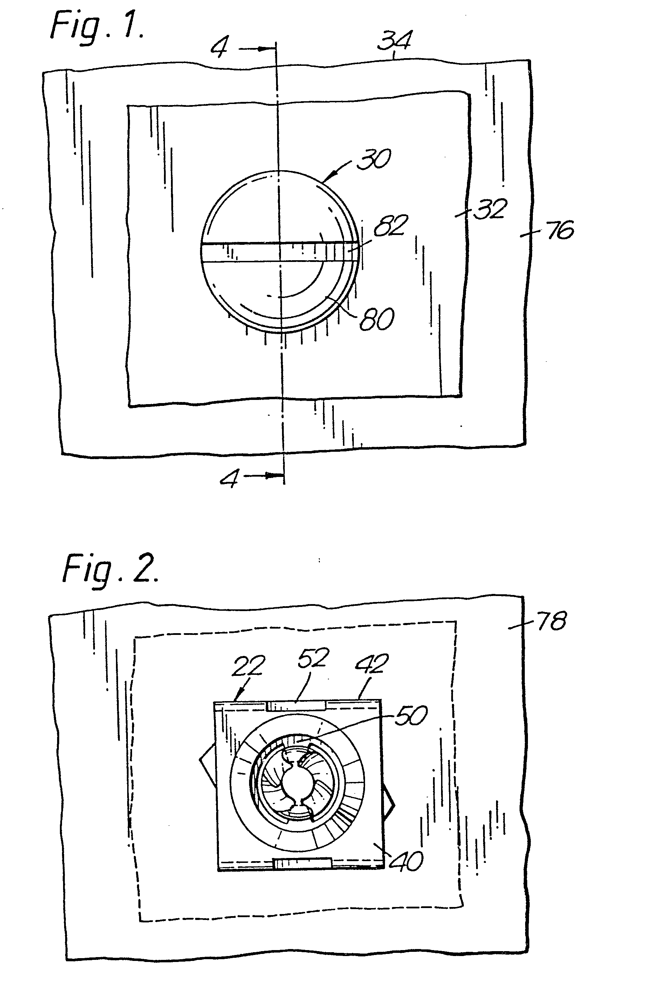

The fastener assembly, in assembled condition, is depicted in Figures 1, 2 and 4 as holding together two panels 32 and 34.

As shown, panel 32 has an aperture 36 therethrough and panel 34 has an aperture 38 therethrough. These apertures are designed to be aligned so that when the stud 30 is coupled with the panel 32 and the receptacle 20 is coupled with the panel 34, the stud and receptacle can be interconnected to hold the panels 32 and 34 together.

The U-shaped housing 22, which can be simply formed from a metal blank includes a base 40 and a pair of upstanding opposing flat legs 42 and 44, each of which terminates at its free end in a respective outwardly extending flange 46 or 48. The base 40 is slightly dished and has a central aperture 50 therein and each leg has a rectangularly shaped slot 52 extending upwardly from the base toward the open end of the housing, but terminating short of the open end. On each leg, adjacent and below the flange 46 or 48 at the end of the leg, is an inwardly extending tang 54, the tangs on each leg being located on opposite sides of the housing. It has been found convenient to form tangs 54 by cutting and bending portions of the legs 42 and 44 so that the tangs are integrally formed with the housing. It will be appreciated that the construction of the housing is extremely simple.

The number of legs on each housing and, accordingly, the number of cooperating tangs and protrusions is a matter of choice.

The base plate 24 is also slightly dished and is substantially rectangular in configuration with a central aperture 56 therein. A pair of tabs 58 extend inwardly into the aperture and are diametrically opposed. Aligned with the tabs 58 and extending outwardly from the plate 24 are a pair of opposed projections 60 which are designed to fit and slide vertically in the slots 52 of the housing. Four upstanding stops 62 are located at the four corners of the plate 24 and extend upwardly from the surface thereof. The plate 24 is adapted to be inserted into the housing with the aperture 56 aligned with the aperture 50 of the housing and the projections 60 sliding in the slots 52. Thus, the plate 24 is permitted limited vertical reciprocation while being prevented from rotational movement by the positioning of the projections 60 in the slots 52.

The helical spring 26 is a conventional helical compression spring and is large enough to seat on the base plate 24, outside the dished portion 64 surrounding the aperture 56. The corner stops 62 assist in retaining the spring in a centralized position. The upper end of the spring 26 seats against the undersurface of the top plate 28 which is slightly dished to centralize the spring. The top plate 28 has a small enough diameter across surfaces 73 and surfaces 75 to permit its rotation within housing 22. The top plate 28 is formed with a central aperture 66 for alignment with the apertures 56 and 50 of the base plate and housing respectively and also with the passageway 68 through the helical spring 26. A pair of keyway notches 70 are diametrically opposed about aperture 66. Aligned with the keyways 70 are a pair of opposing generally triangularly shaped protrusions 72. The top plate has overall a lozenge shape, but is asymmetrical, the distance between opposed edge surfaces 71 being greater than that between surfaces 73. Flat surfaces 75 connect the adjacent surfaces 71 and 73.

The dimensions of the housing 22, the plate 24, the spring 26, and the top plate 28 are such that when they are positioned in the housing the spring 26 is partially compressed and the top plate is shiftable or rotatable to a position where the protrusions 72 are retained or captured against the undersurface of the opposing tangs 54. To facilitate retention in this position the lower edge 74 of each tang 54 is tapered or sloped downwardly and inwardly thereby guarding against unintentional displacement of the protrusions 72 from beneath tangs 54.

In this condition, the receptacle 20 is prepared for mounting in panel 34. The receptacle is mounted through the opening 38 from the front side 76 of the panel 34. There is no need for access to the rear side 78 of the panel. The receptacle is inserted through the opening 38 until the undersurfaces of the flanges 46, 48 engage the side 76 of the panel 34. The receptacle is designed in a range of sizes to suit different opening sizes so that the flanges 46 and 48 extend beyond the edges of the opening. The sides 42', 44' of the legs 42, 44 respectively act to prevent any rotation of the receptacle in the opening, by engagement with the sides of the opening.

After initial locating of the receptacle in the opening 38 an appropriate tool such as the tip of a screwdriver can be engaged with the keyway notches 70 of the top plate 28 and the plate rotated to displace protrusions 72 from engagement with the undersurface of tangs 54. This rotation will bring the protrusions 72 into a position where they are free from engagement with the legs 42 and 44 and extend outwardly therefrom, the edge surfaces 75 then substantially abutting the inner sides of the legs. Over rotation of the top plate 28 is prevented by the increased width or diameter across the edge surfaces 71. The spring 26 which is partially compressed will then bias the top plate 28 upward until the protrusions 72 engage with the undersurface 78 of the panel 34 thereby locking the receptacle in position. The position of the tabs in the locked position is clearly depicted in Figure 2. In this arrangement, the panel is held between the undersurface of the lateral flanges 46 and 48 and the upper surface of the protrusions 72. The receptacle is then ready to receive the stud 30.

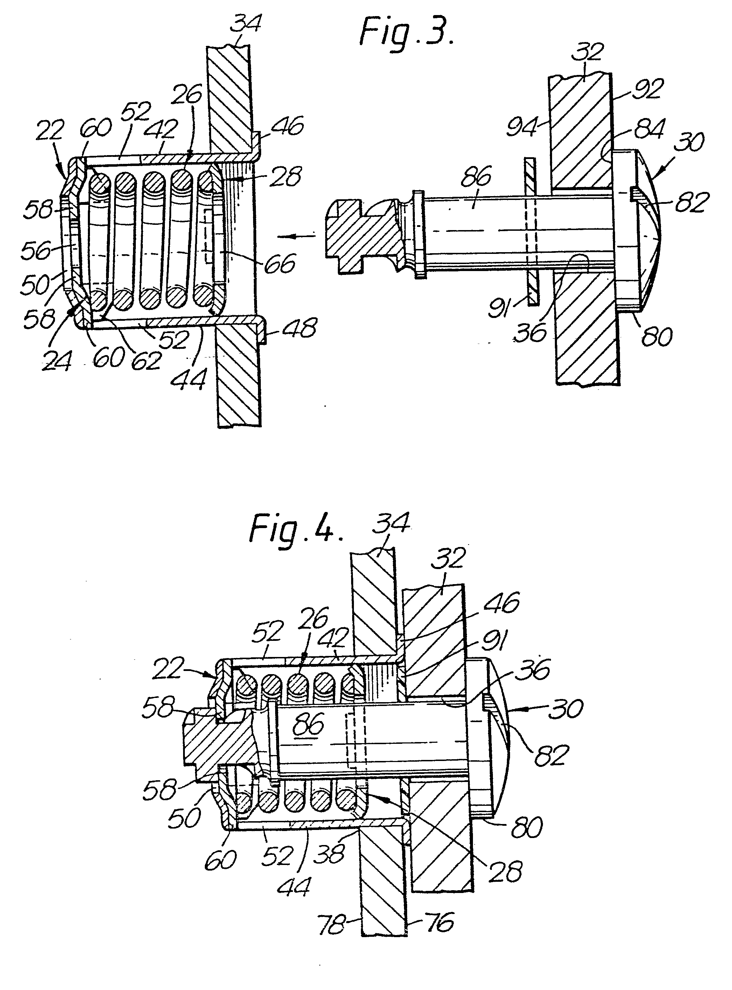

As shown, the stud is conventional and includes an enlarged head 80 with a slot 82 in its upper surface for engagement by a tool, such as a screwdriver tip, for rotational purposes. Extending from the undersurface 84 of the head 80 is a reduced diameter shank 86. Adjacent the end of the shank 86 distal from the head is a helical cam slot 88. It has been found effective to make the length of the cam slot sufficient to require a quarter turn to move the stud in the receptacle between the open and closed positions. The cam slot generally terminates in a locking detent at the upper end of its helical path. As a matter of choice, a washer 91 can be employed to facilitate retention of the stud on the panel 32 prior to assembling the fastener and fastening the panels together. As shown in Figure 3, the stud is mounted on the panel 32 by extending the shank 86 through the aperture 36. The head 80 is larger than the aperture so that the undersurface 84 of the head engages with the upper surface 92 of the panel. The washer 91 can then be inserted on the shank end and shifted upward into the proximity of the undersurface 94 of the panel 32.

The stud is inserted into the receptacle 20 as panel 32 is brought into alignment with and against the panel 34. The stud shank 86 passes through the aperture 66 in the top plate 28, through the central opening 68 in the compressed helical spring 26, and into the aperture 56 in the base plate 24, passage through the aperture 56 being aided by the dished form of the base plate 24 which directs the tip of the shank towards the centre. At that time, the tab 58 will engage with the entrance to the helical cam slot 88 and rotation of the stud by use of the tool in the slot 82 will cause the base plate 24 to ride axially upward as tabs 58 follow the cam slots 88 into the locking detents. In this embodiment a quarter turn rotation is sufficient to accomplish this result. Axial movement of the plate 24 is permitted by the axial freedom of movement of the projections 60 in the slots 52, the slots 52 preventing rotation of the plate as the stud rotates so that the fastening action can be accomplished. As the plate 24 moves upward it further compresses the spring 26 which is captured between the plate and the dished undersurface of the top plate 28. The top plate is prevented from axial upward movement by the engagement of its protrusions 72 with the undersurface 78 of the panel 34. Thus, spring tension is provided by the biased helical spring 26 to assist in retaining the stud and receptacle in fastened condition with the tabs 58 in the locking detents at the ends of the cam slots 88.

Unfastening is accomplished simply by rotating the stud 30 in the opposite direction therby permitting plate 24 to travel downward and free tabs 58 from cam slot 88. The stud and panel 32 can then be disassembled from the receptacle and panel 34.

If desired, the receptacle 20 can be disassembled from panel 34 by using the appropriate tool to engage the keyway notches 70 and to depress the top plate 28 downward, thereby compressing the helical spring 26, until rotation of the top plate 28 brings the protrusions 72 into engagement with the undersurfaces 74 of the tangs 54. The receptacle will then be free for removal through the aperture 38.

## Claims

1. A receptacle (20) for receiving and securing a stud (30) to enable a pair of members (32, 34) to be fastened together, the receptacle (20) being mounted in a non-circular aperture (38) in one of the members (34) and comprising a housing (22) for location in the aperture (38), the housing (22) having a part for engaging a front face (76) of the one member (34) and means for preventing rotation of the receptacle (20) in the aperture (38), an element (28) rotatable in the housing (22) between a first position in which it is biased against an abutment on the housing (22) and a second position in which it is biased against the rear face (78) of the one member (34) to lock the receptacle (20) on the one member (34), and means (24) for securing the stud within the receptacle (20); characterised in that the housing (22) is substantially U-shaped and comprises a base (40) and a pair of depending opposed substantially flat legs (42, 44), the part for engaging the front face of the member being formed by an outwardly extending flange (46, 48) at the free end of each leg (42, 44), the abutment being formed by an inwardly directed tang (54) on each leg (42, 44), and the means for preventing rotation of the receptacle (20) in the aperture (38) comprising the sides (42', 44') of the legs (42, 44).

2. A receptacle according to claim 1, characterized in that the rotatable element (28) comprises a plate having one or more protrusions (72) extending from its edge, the protrusion or protrusions (72) being located within the housing when the plate (28) is in its first position, and extending outwardly from the housing (22) when the plate (28) is in its second position.

3. A receptable according to claim 1 or claim 2, wherein the edge (74) of each tang (54) against which the element (28) abuts when in the first position, is inclined towards the base (40) from the leg (42, 44) towards its free end.

4. A receptacle according to any of claims 1 to 3, characterised in that a helical spring (26) is located between the element (28) and the means (24) for securing the stud within the receptacle (20) to bias the element (28) into engagement with the tangs (54) or a rear face (78) of the one member (34) respectively.

5. A receptacle according to any of claims 1 to 4, characterised in that the housing (22) is integrally formed from a single part.

6. A receptacle according to any of claims 1 to 5, characterized in that the means (24) for securing the stud within the receptacle comprises a plate (24) located within the housing (22), the plate including means (58) for engagement with the stud (30) and having a pair of projections (60) on opposite sides, the projections (60) sliding in respective slots (52) formed in the legs (42, 44) to prevent rotation of the plate (24) with respect to the housing (22).

7. A receptacle according to claim 6, wherein the means for engagement with the stud comprises a pair of tabs (58) for engagement with respective cam slots (88) in the stud (30).

## Patentansprüche

1. Aufnahme (20) zum Aufnehmen und Festhalten eines Bolzens (30) zur gegenseitigen Verbindung eines Paares von Bauelementen (32, 34), wobei die Aufnahme (20) in einer nichtkreisförmigen Öffnung (38) eines der Bauelemente (34) befestigt wird, mit einem in der Öffnung (38) anzuordnenden Gehäuse (22), das einen an einer Vorderseite (76) des einen Bauelementes (34) angreifenden Teil und Mittel zur Verhinderung einer Drehung der Aufnahme (20) in der Öffnung (38) aufweist, einem Element (28), das im Gehäuse (22) zwischen einer ersten Stellung, in welcher es gegen einen Vorsprung des Gehäuses (22) vorgespannt ist, und einer zweiten Stellung drehbar ist, in welcher es gegen die Hinterseite (78) des einen Bauelementes (34) vorgespannt ist, um die Aufnahme (20) an dem einen Bauelement (34) zu verankern, und Mitteln (24) zum Festhalten des Bolzens innerhalb der Aufnahme (20), dadurch gekennzeichnet, daß das Gehäuse (22) im wesentlichen U-förmig ist und eine Basis (40) sowie ein Paar von abstehenden, einander gegenüberliegenden, im wesentlichen flachen Schenkeln (42, 44) aufweist, daß der an der Vorderseite des Bauelementes angreifende Teil durch einen sich am freien Ende jedes Schenkels (42, 44) nach außen erstreckenden Flansch (46, 48) gebildet ist, daß der Anschlag durch eine nach innen gerichtete Zunge (54) an jedem Schenkel (42, 44) gebildet ist, und daß die Mittel zur Verhinderung einer Drehung der Aufnahme (20) in der Öffnung (38) die Seiten (42', 44') der Schenkel (42, 44) aufweisen.

2. Aufnahme nach Anspruch 1, dadurch gekennzeichnet, daß das drehbare Element (28) eine Platte aufweist, die mit einem oder mehreren Vorsprüngen (72) versehen ist, welche sich von ihrer Kante wegerstrecken, wobei der Vorsprung oder die Vorsprünge (72) innerhalb des Gehäuses angeordnet sind, wenn die Platte (28) sich in ihrer ersten Stellung befindet, und sich vom Gehäuse (22) nach außen erstrecken, wenn die Platte (28) sich in ihrer zweiten Stellung befindet.

3. Aufnahme nach Anspruch 1 oder 2, dadurch gekennzeichnet, daß die Kante (74) jeder Zunge (54), an welcher das Element (28) in der ersten Stellung anliegt, vom Schenkel (42, 44) gegen ihr freies Ende bezüglich der Basis (40) geneigt ist.

4. Aufnahme nach einem der Ansprüche 1 bis 3, dadurch gekennzeichnet, daß eine Wendelfeder (26) zwischen dem Element (28) und den Mitteln (24) zum Festhalten des Bolzens innerhalb der Aufnahme (20) vorgesehen ist, um das Element (28) in Eingriff mit den Zungen (54) bzw. einer Hinterfläche (78) des einen Bauteiles (34) vorzuspannen.

5. Aufnahme nach einem der Ansprüche 1 bis 4, dadurch gekennzeichnet, daß das Gehäuse (22) aus einem einzigen Teil einstückig geformt ist.

6. Aufnahme nach einem der Ansprüche 1 bis 5, dadurch gekennzeichnet, daß die Mittel (24) zum Festhalten des Bolzens innerhalb der Aufnahme eine Platte (24) aufweisen, die innerhalb des Gehäuses (22) angeordnet ist, wobei die Platte Mittel (58) zum Eingriff mit dem Bolzen (30) und ein Paar von Vorsprüngen (60) auf gegenüberliegenden Seiten aufweist, und wobei die Vorsprünge (60) in entsprechenden, in den Schenkeln (42, 44) ausgebildeten Schlitzen (52) gleiten, um eine Drehung der Platte (24) gegenüber dem Gehäuse (22) zu verhindern.

7. Aufnahme nach Anspruch 6, bei welcher die Mittel zum Eingriff mit dem Bolzen ein Paar von Lappen (58) aufweisen, die mit entsprechenden Führungsschlitzen (88) am Bolzen (30) in Eingriff versetzbar sind.

## Revendications

1. Un réceptacle (20) pour la réception et l'assujettissement d'un goujon (30) de manière à permettre la fixation l'un à l'autre d'une paire d'éléments (32, 34), le réceptacle (20) étant monté dans une ouverture non circulaire (38) dans l'un des éléments (34) et comprenant un corps (22) destiné à être placé dans l'ouverture (38), le corps (22) comportant une partie destinée à porter contre une face avant (76) du premier (34) desdits éléments et un moyen pour empêcher une rotation du réceptacle (20) dans l'ouverture (38), une pièce (28) pouvant tourner dans le corps (22) entre une première position dans laquelle elle est sollicitée contre un élément de butée se trouvant sur le corps (22) et une seconde position dans laquelle elle est sollicitée contre la face arrière (78) du premier élément (34) de manière à verrouiller le réceptacle (20) pour le premier élément (34), et un moyen (24) pour assujettir le goujon à l'intérieur du réceptacle (20) caractérisé en ce que le corps (22) a une forme sensiblement en U et comprend une base (40) et une paire de branches opposées sensiblement plates (42, 44) s'étendant vers le bas, la partie destinée à venir porter contre la face avant de l'élément étant formée par un rebord (46, 48) s'étendant vers l'extérieur et se trouvant à l'extrémité libre de chaque branche (42, 44), l'élément de butée étant formé par une patte (54) dirigée vers l'intérieur et formée sur chaque branche (42, 44), et le moyen servant à empêcher la rotation du réceptacle (20) dans l'ouverture (38) comprenant les côtés (42', 44') des branches (42, 44).

2. Un réceptacle selon la revendication 1, caractérisé en ce que la pièce (28) pouvant tourner est constituée par une plaque comportant une ou plusieurs saillies (72) s'étendant depuis son bord, la ou les saillies (72) étant disposées à l'intérieur du corps lorsque la plaque (28) se trouve dans sa première position, et s'étendant vers l'extérieur à partir du corps (22) lorsque la plaque (28) se trouve dans sa seconde position.

3. Un réceptacle selon les revendications 1 ou 2, dans lequel le bord (74) de chaque patte (54) contre laquelle la pièce (28) porte lorsqu'elle se trouve dans la première position, est incliné vers la base (40) depuis la branche (42, 44) en direction de son extrémité libre.

4. Un réceptacle suivant l'une quelconque des revendications 1 à 3, caractérisé en ce qu'un ressort hélicoïdal (26) est placé entre l'élément (28) et le moyen (24) servant à assujettir le goujon à l'intérieur du réceptacle (20) afin de solliciter l'élément (28) de manière qu'il porte contre les pattes (54) ou une face arrière (78) du premier élément (34) respectivement.

5. Un réceptacle suivant l'une quelconque des revendications 1 à 4, caractérisé en ce que le corps (22) est formé intégralement à partir d'une seule pièce.

6. Un réceptacle suivant l'une quelconque des revendications 1 à 5, caractérisé en ce que le moyen (24) servant à assujettir le goujon à l'intérieur du réceptacle comprend une plaque (24) disposée à l'intérieur du corps (22), cette plaque comprenant un moyen (58) destiné à venir en prise avec le goujon (30) et comportant une paire de saillies (60) sur ses côtés opposés, les saillies (60) coulissant dans des fentes respectives (52) formées dans les branches (42, 44) pour empêcher une rotation de la plaque (24) par rapport au corps (22).

7. Un réceptacle suivant la revendication 6, dans lequel le moyen destiné à venir en prise avec le goujon comprend une paire de rails (58) destinés à être engagés dans des rainures correspondantes (88) formant came ménagées dans le goujon (30).

0 018 809

Fig. 1.

Fig. 2.

1

0 018 809

# Fig.3.

# Fig.4.

2

Fig. 5.